(19) Europäisches Patentamt
European Patent Office
Office européen des brevets

(11) Veröffentlichungsnummer: **0 254 093 B1**

(12) **EUROPÄISCHE PATENTSCHRIFT**

(45) Veröffentlichungstag der Patentschrift: **27.02.91**

(51) Int. Cl.$^5$: **C07C 271/40**, A01N 47/22

(21) Anmeldenummer: **87109506.3**

(22) Anmeldetag: **02.07.87**

Die Akte enthält technische Angaben, die nach dem Eingang der Anmeldung eingereicht wurden und die nicht in dieser Patentschrift enthalten sind.

# (54) Kristallmodifikation und Verfahren zu ihrer Herstellung.

(30) Priorität: **19.07.86 DE 3624437**

(43) Veröffentlichungstag der Anmeldung:
**27.01.88 Patentblatt 88/04**

(45) Bekanntmachung des Hinweises auf die Patenterteilung:
**27.02.91 Patentblatt 91/09**

(84) Benannte Vertragsstaaten:
**BE CH DE FR GB IT LI NL**

(56) Entgegenhaltungen:
**DE-A- 2 231 249**

(73) Patentinhaber: **BASF Aktiengesellschaft**
**Carl-Bosch-Strasse 38**
**D-6700 Ludwigshafen(DE)**

(72) Erfinder: **Kersten, Siegfried, Dr.**
**Max-Slevogt-Strasse 21**
**D-6710 Frankenthal(DE)**
Erfinder: **Jaeger, Karl-Friedrich, Dr.**
**Chenoverstrasse 7**
**D-6703 Limburgerhof(DE)**
Erfinder: **Koenig, Karl-Heinz, Dr.**
**Pierstrasse 8 a**
**D-6710 Frankenthal(DE)**
Erfinder: **Mueller, Albrecht, Dr.**
**Wolframstrasse 6**
**D-6700 Ludwigshafen(DE)**
Erfinder: **Pawliczek, Josef Bernd,Dr.**
**Im Lammsbauch 3**
**D-6720 Speyer(DE)**
Erfinder: **Recker, Hans-Gert, Dr.**
**Lisztstrasse 117**
**D-6700 Ludwigshafen(DE)**
Erfinder: **Rohr, Wolfgang, Dr.**
**In der Dreispitz 13**
**D-6706 Wachenheim(DE)**
Erfinder: **Wigger, August, Dr.**
**Rehbachstrasse 22**
**D-6708 Neuhofen(DE)**

**EP 0 254 093 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Kristallmodifikation von 2-(2-Chlor-1-methoxy-ethoxy)-phenyl-methylcarbamat I, die bei 79 °C schmilzt, Verfahren zu ihrer Herstellung und ihre Verwendung zur Schädlingsbekämpfung.

Verbindung I ist ein unter der Kurzbezeichnung Cloethocarb bekannter insektizider Wirkstoff (DE-C-22 31 249): seine Formulierungen in fester Form, z.B. Kerngranulate mit Sand oder Maiskolbenspindeln aber auch Suspensionskonzentrate (SC) leiden unter Veränderungen, die insbesondere bei Feststoffen, auch schon beim Rohstoff, sich als Verbacken oder Verklumpen äußern. Der Vorgang beruht jedoch nicht etwa auf hygroskopischem Verhalten, sondern hat andere Ursachen. Cloethocarb kann nämlich je nach Fällbedingung oder Wahl des Lösungsmittels in verschiedenen Kristallmodifikationen auftreten. Diese Modifikationen unterscheiden sich nach Debye-Scherrer-Aufnahmen nur geringfügig. Die Kristalle der verschiedenen Modifikationen liegen auf jeden Fall im triklinen System vor.

Es wurde nun gefunden, daß eine bei 79 °C schmelzende Kristallmodifikation von Verbindung I die Eigenschaft des Verklumpens nicht aufweist.

Durch Untersuchung mittels Differentialthermoanalyse (DTA) sind bei technischen Produkten Schmelzpunktunterschiede von I bis 2 °C zu beobachten, wobei eine höherschmelzende Modifikation von Cloethocarb (M I) mit Schmelzpunkt 79 °C und eine niedrigerschmelzende (M II) mit Schmelzpunkt 77 °C festgestellt werden kann. (Die Bezeichnungen M I und M II sind willkürlich gewählt.)

Festkörper-NMR-Aufnahmen zeigen ebenfalls kleine Unterschiede in der Lage einiger Signale für die Modifikationen M I und M II. Bei den Aufnahmen von Mischungen der Modifikationen sind diese Signale nicht mehr getrennt und eine Bestimmung des Mischungsverhältnisses nicht möglich.

Die Erfindung wirkt sich folgendermaßen aus. Formulierte Ware mit Gloethocarb der Modifikation M II verändert sich während der Lagerung, besonders bei erhöhter Temperatur (40-60 °C): die formulierte Ware blüht aus, die ausblühenden Kristalle verhaken sich und verursachen dadurch eine Verklumpung des Materials, so daß ein gleichmäßiges Austragen des Produktes nicht mehr gewährleistet ist. Cloethocarb wandelt sich während dieses Vorgangs von der Modifikation M II in die Modifikation M I um.

Auch in der SC-Formulierung beobachtet man bei Vorliegen der Modifikation II eine Rekristallisation in der wäßrigen Suspension, so daß die Formulierung zerstört wird.

Cloethocarb der Modifikation M I zeigt dieses Aufblühen nicht und sowohl feste Zubereitungen, z.B. Kerngranulate (Sand und Corn Cob als Träger) als auch die SC-Formulierung verändern sich während der Lagerung nicht und lassen sich anschließend einwandfrei ausbringen.

Es bestand nun die Aufgabe, Cloethocarb in der richtigen Modifikation M I für die Formulierung herzustellen. Hierbei ist es von großer Bedeutung Cloethocarb in der Modifikation M I ohne Beimengen der Modifikation M II zu gewinnen, da auch kleine Mengen von Modifikation M II zu dem oben geschilderten Ausblühen führen.

Nach dem erfindungsgemäßen Verfahren wird Cloethocarb dann in der Modifikation M 1 erhalten, wenn man die bei Raumtemperatur vorliegende Cloethocarb-Methylenchlorid-Lösung mit 65 bis 70 °C warmem Heptan so mischt, daß die Mischung eine Temperatur von 55 bis 60 °C erreicht und die anschließende Kristallisation von dieser Temperatur an durch Abkühlen erfolgt. Animpfen mit der Modifikation M I ist i.a. nicht nötig, kann aber im Einzelfall vorteilhaft sein. Man kann die Kristallisation auch durch Erhitzen von Cloethocarb in einem Lösungsmittelgemisch von Methylenchlorid/Heptan im Volumenverhältnis von 1:5 bis 1:30, und anschließendem langsamem Erkalten, erhalten.

An Stelle des bevorzugten Methylenchlorids sind auch Chlorkohlenwasserstoffe, wie Chloroform, Tetrachlorkohlenstoff, 1,1-Dichlorethan, 1,2-Dichlorethan, 1,1,1-Trichlorethan, 1,1,2-Trichlorethan, 1,1,2,2-Tetrachlorethan und Ethylenchlorid; aromatische Kohlenwasserstoffe, wie Benzol, Toluol, und die Xylole; aromatische Chlorkohlenwasserstoffe, wie Chlorbenzol und die Dichlorbenzole; Ether, wie Dimethylether, Diethylether, Diisopropylether, Methyl-tert.-butylether, Furan, Tetrahydrofuran und Dioxan geeignet. In 100 Litern eines dieser Lösungsmittel lassen sich zwischen 15 und 60 kg Cloethocarb lösen.

Statt des bevorzugten Heptans sind auch andere acyclische und cyclische Kohlenwasserstoffe wie n-Pentan, n-Hexan, n-Heptan, N-Octan, die Pentan-, Hexan-, Heptan- und Octan-Isomeren und deren Isomerengemische, Petrolether, Cyclopentan, Cyclohexan, Cycloheptan und Cyclooctan geeignet.

Ein anderes erfindungsgemäßes Verfahren, durch das ebenfalls die Modifikation M I der erfindungsgemäßen Struktur erhältlich ist, besteht in der Fällung wäßrig-acetonischer Lösungen von Cloethocarb mit Wasser. Praktisch geht man z.B. so vor, daß man Cloethocarb in Aceton löst und bei einer Temperatur unterhalb von Raumtemperatur (z.B. 5 bis 10 °C) mit Wasser fällt.

Schließlich kann man erfindungsgemäß die Umwandlung von M II bzw. Mischungen aus M I und M II auch durch intensive Einwirkung mechanischer Mittel, z.B. Reiben oder Rühren, erzwingen.

Die folgenden Beispiele verdeutlichen das erfindungsgemäße Verfahren:

1. Fällung einer Cloethocarb-Methylenchlorid-Lösung mit 65 bis 70° C warmem Heptan in einer Mischstrekke.

Innerhalb einer Stunde werden 1000 l Heptan auf 65 bis 70° C erhitzt und in einer mit Raschigringen gefüllten Mischstrecke mit 110 l Cloethocarb-Methylenchlorid-Lösung (20° C), die etwa 38 bis 40 kg Cloethocarb gelöst enthält, gemischt. Am Auslauf der Mischstrecke stellt sich eine Temperatur von 55 bis 60° C ein. Der Kristallisationskessel wird vorher auf 55 bis 60° C aufgewärmt, so daß die Kristallisation bei 55° C beginnen kann.

Das weitere Abkühlen kann durch Druckverminderung, also Siedekühlung, oder durch Abkühlen über den Kesselmantel, erfolgen.

Man erhält nach Filtrieren bzw. Abschleudern und Trocknen ein Produkt, das nach Differentialthermoanalyse reines Cloethocarb der Modifikation M I ist.

2. Fällung einer Cloethocarb-Methylenchlorid-Lösung mit 65 bis 70° C warmem n-Heptan (Heptanvorlage)

Wird das n-Heptan vorgelegt, auf 65 bis 70° C erwärmt und die Lösung von Cloethocarb in Methylenchlorid (20° C) hinzugefügt, so stellt sich eine Mischtemperatur von 55° C ein. Das auskristallisierte Cloethocarb liegt als reine Modifikation M I vor (DTA).

Vergleich

Fällung einer Lösung mit kaltem Heptan (Modifikation M II)

a) Bei der Fällung einer Lösung von Cloethooarb in Methylenchlorid mit n-Heptan bei 15 bis 30° C erhält man Cloethocarb der Modifikation M II (DTA-Messungen).

b) Wird mit Kristallen der Modifikation M I angeimpft, so erhält man bei der Fällung mit kaltem Heptan Cloethocarb in einer Mischung der Modifikationen M I und M II (DTA-Messungen).

3. Fällung einer Cloethocarb-Aceton-Lösung mit Wasser

Wird eine Cloethocarb-Aceton-Lösung bei 5 bis 10° C in Wasser eingetragen, so kristallisiert Cloethocarb in der Modifikation M I aus (DTA-Messungen).

4. Umwandlung von Cloethocarb der Modifikation M II in Modifikation M I in kristallinem Zustand

a) Durch intensives Mischen in einer Rührnutsche bei 55 bis 60° C über einen Zeitraum von 16 Stunden gelingt die Umwandlung des Cloethocarb von der Modifikation M II in die Modifikation M I (DTA-Messungen).

b) Wird der gleiche Versuch ohne Rühren durchgeführt, das Material also nur bei 55 bis 60° C getempert, so erfolgt keine Umwandlung der Modifikation M II in die Modifikation M I (DTA-Messungen).

## Ansprüche

1. Verbindung der chemischen Formel I

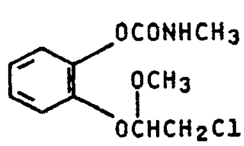

(I)

in der bei 79° C schmelzenden Kristallmodifikation.

2. Verfahren zur Herstellung kristalliner Massen der Verbindung I nach Anspruch 1, dadurch gekennzeichnet, daß man Verbindung I in Methylenchlorid löst, die Lösung auf eine Temperatur unterhalb von 40° C bringt, mit überschüssigem n-Heptan einer Temperatur von etwa 65 bis 70° C derart mischt, daß sich eine Mischungstemperatur von etwa 55 bis 60° C einstellt und nach dem Abkühlen Verbindung I in üblicher Weise gewinnt.

3. Verfahren zur Herstellung kristalliner Massen der Verbindung I nach Anspruch 1, dadurch gekennzeichnet, daß man eine Lösung aus I in Aceton bei 5 bis 10° C in Wasser einträgt.

4. Verfahren zur Herstellung kristalliner Massen der Verbindung I nach Anspruch 1, dadurch gekennzeichnet, daß man die bei 77° C schmelzende Kristallmodifikation von I bei 55 bis 60° C unter intensivem Mischen tempert.

5. Schädlingsbekämpfungsmittel, enthaltend einen hierfür üblichen Trägerstoff und die Kristallmodifikation von I gemäß Anspruch 1.

6. Schädlingsbekämpfungsmittel nach Anspruch 5, dadurch gekennzeichnet, daß es 0,1 bis 95 Gew.% der bei 79° C schmelzenden Kristallmodifikation von I enthält.

7. Verfahren zur Bekämpfung von Schädlingen, dadurch gekennzeichnet, daß man die Schädlinge und/oder die von Schädlingen freizuhaltenden Flächen und/oder Räume mit einer für Schädlinge wirksamen Menge der Kristallmodifikation von I gemäß Anspruch 1 behandelt.

## Claims

1. A compound of the chemical formula I

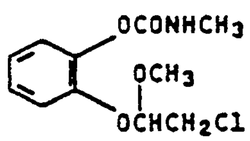

(I)

in the crystalline modification which melts at 79° C.

2. A process for the preparation of a crystalline material consisting of compound I as claimed in claim 1, wherein compound I is dissolved in methylene chloride, the solution is brought to below 40° C and mixed with excess n-heptane at about 65-70° C so that a mixing temperature of about 55-60° C results, and, after cooling, compound I is obtained in a conventional manner.

3. A process for the preparation of a crystalline material consisting of compound I as claimed in claim 1, wherein a solution of I in acetone at 5-10° C is introduced into water.

4. A process for the preparation of a crystalline material consisting of compound I as claimed in claim 1, wherein the crystalline modification of I which melts at 77° C is heated with intensive mixing at 55-60° C.

5. A pesticide containing a conventional carrier and the crystalline modification of I as claimed in claim 1.

6. A pesticide as claimed in claim 5, which contains from 0.1 to 95% by weight of the crystalline modification of I which melts at 79° C.

7. A method of controlling pests, wherein the pests and/or the areas and/or rooms to be kept free of pests are treated with the crystalline modification of I as claimed in claim 1, in an amount which is effective against pests.

## Revendications

1. Composé de formule chimique I

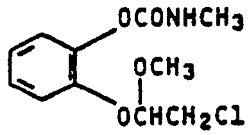

(I)

dans la modification cristalline fondant à 79 degrés C.

2. Procédé de préparation de masses cristallines du composé I, selon la revendication 1, caractérisé par le fait que l'on dissout le composé I dans du chlorure de méthylène, on amène la solution à une température inférieure à 40 degrés C, on la mélange avec du n-heptane en excès d'une température d'environ 65 à 70 degrés C de manière qu'il en résulte une température du mélange d'environ 55 à 60 degrés C et, après refroidissement, on obtient le composé I de manière usuelle.

3. Procédé de préparation de masses cristallines de composé I, selon la revendication 1, caractérisé par le fait que l'on introduit dans de l'eau, entre 5 et 10 degrés C, une solution de I dans de l'acétone.

4. Procédé de préparation de masses cristallines du composé I, selon la revendication 1, caractérisé par le fait que l'on soumet la modification cristalline de I, fondant à 77 degrés C, avec mélange intense, à un traitement thermique entre 55 et 60 degrés C.

5. Pesticide, contenant un véhicule usuel à cet effet et la modification cristalline de I, selon la revendication 1.

6. Pesticide selon la revendication 5, caractérisé par le fait qu'il renferme 0,1 à 95% en poids de la modification cristalline de I, fondant à 79 degrés C.

7. Procédé de lutte contre les parasites, caractérisé par le fait que l'on traite les parasites et/ou les surfaces et/ou locaux à maintenir exempts de parasites, avec une quantité efficace pour des parasites de la modification cristalline de I, selon la revendication 1.